(19) Europäisches Patentamt
European Patent Office
Office européen des brevets

(11) Publication number: **0 501 587 A1**

# (12) EUROPEAN PATENT APPLICATION

(21) Application number: **92200555.8**

(22) Date of filing: **25.02.92**

(51) Int. Cl.$^5$: **C08F 222/40**, C08G 73/12, C08J 5/24, B32B 17/00

(30) Priority: **28.02.91 US 662672**

(43) Date of publication of application: **02.09.92 Bulletin 92/36**

(84) Designated Contracting States: **CH DE FR GB LI NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Corley, Larry Steven**
**6807 San Pablo Drive**
**Houston, Texas 77083(US)**

## (54) Bisimide resin processing.

(57) A liquid processing technique in which a bisimide is mixed with from 0.6 to 1.5 equivalents of a bis(alpha-alkylvinyl)arene at an elevated temperature to form a liquid resin blend; a continuous fiber is impregnated with the liquid resin blend and dimensionally stabilised, and the dimensionally-stabilised impregnated fiber is subjected to conditions effective to cure the liquid resin blend and to form a shaped article.

EP 0 501 587 A1

This invention relates to the preparation of shaped articles from bismaleimide formulations having enhanced processability and high cured glass transition temperature.

Bismaleimide resins are thermosettable materials useful in high-temperature electrical and advanced composite applications. Advanced composites are high-performance materials made up of a fiber-reinforced thermoplastic or thermosettable material. Cured bismaleimides have good high-temperature properties which meet the demanding property requirements of advanced composites.

Previous bismaleimide systems have certain disadvantages, however, including brittleness, high water pickup in the cured state, and uncured viscosity too high for liquid processing techniques such as filament winding or pultrusion. Modification of bismaleimides with disecondary amines or dithiols can produce fairly tough polymers, but they have relatively low cured thermal stability, high uncured viscosity (in the absence of solvents), and viscosity that rapidly increases under typical processing conditions. Modification of bismaleimides with bisallyl or bispropenyl modifiers such as diallyl phthalate, diallyl bisphenol-A or bis-(allylphenoxy)benzophenones also increases toughness, but the very large amounts of the modifiers necessary depress glass transition temperature significantly.

It is therefore an object of the invention to provide liquid processing techniques for high-performance bisimides.

According to the invention, there is provided a method for liquid processing of a thermosettable bisimide, the method comprising mixing the bisimide and from 0.6 to 1.5 equivalents of a bis(alpha-alkylvinyl)arene at an elevated temperature to form a liquid resin blend; impregnating a continuous fiber with the liquid resin blend; dimensionally stabilizing the impregnated fiber; and subjecting the dimensionally-stabilized fiber to conditions effective to cure the liquid resin blend and to form a shaped article. The starting composition has acceptable viscosity prior to cure and provides tough cured compositions without significant loss in cured glass transition temperature.

The invention process employs a composition containing a bisimide. The preferred bisimide resins are N,N'-unsaturated bisimides of the formula

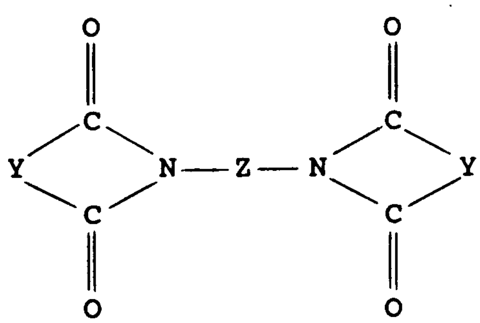

in which Y is a substituted or unsubstituted divalent radical having at least 2, preferably 2 to 6, carbon atoms, and a carbon-carbon double bond, and Z is a divalent radical containing from 2 to 40 carbon atoms. Z can be aliphatic, cycloaliphatic, aromatic or heterocyclic. Z can include heteroatoms and can be substituted or unsubstituted. Examples of bisimides which can be employed are N,N'-unsaturated bisimides of ethylenediamine, hexamethylene diamine, trimethylhexamethylene diamine, o-, m-, or p-phenylenediamines, toluenediamines, 4,4'-diaminodiphenylmethane, 3,3'-diaminodiphenylsulfone, 4,4'-diaminodiphenylether, 4,4'-diaminodicyclohexylmethane, metaxylylene diamine, and 1,1-bis(4-aminophenyl)-cyclohexane. Various N,N'-bisimides are disclosed in U.S. Pat. Nos. 3,562,223, 4,211,860, 4,211,861 and 4,816,531, for example, and can be prepared by methods known in the art.

The N,N'-unsaturated bisimides are preferably difunctional bismaleimides derived from at least one aromatic diamine of the formula

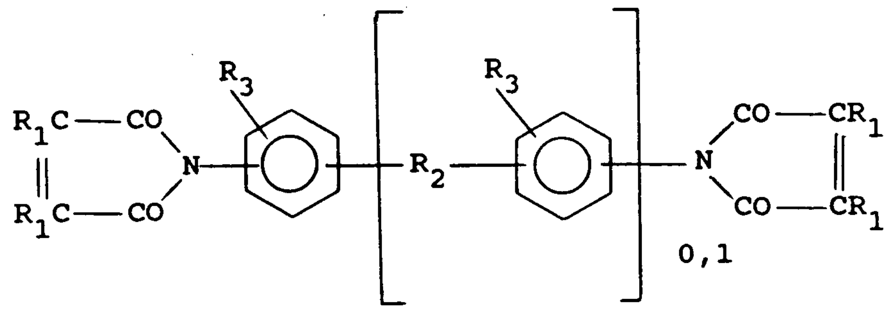

in which each $R_1$ is selected independently from H, $C_{1-2}$ alkyl and halide; $R_2$ is selected from divalent hydrocarbon radicals containing from 1 to 10 carbon atoms, -O-, $-SO_2-$, -COO-, -CONH-, -CO- and -S-; and each $R_3$ is selected independently from H, $C_{1-3}$ alkyl and halide. The preferred bismaleimides are bis(4-maleimidophenyl)methane, 2,4-bismaleimidotoluene, 1,3-bismaleimidobenzene, bis(4-maleimido-3-ethyl-5-methylphenyl)methane and mixtures thereof. A mixture of these bismaleimides such as, for example, a mixture of bis(4-maleimidophenyl)methane, 2,4-bismaleimidotoluene and 1,3-bismaleimidobenzene is sometimes preferred over a single resin for ease of processing. The bismaleimide can contain various additives as processing aids. Suitable N,N'-unsaturated bismaleimides are available commercially, for example from Shell Chemical Co. as Compimide (Trade mark) resins.

The bismaleimide resin can contain imide oligomers according to the formula

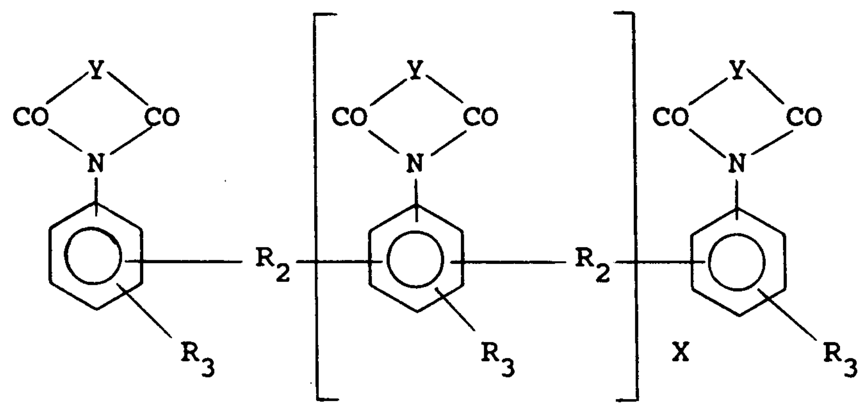

in which x is a number within the range of 1 to 5. Such oligomers may be present as an impurity in difunctional bisimides.

The method of the invention involves the use of a bis(alpha-alkylvinyl)arene modifier capable of acting as a diluent and a chain extender in the cure of bis(unsaturated imide) resins. The arene moiety may be substituted or unsubstituted. Such bis(alpha-alkylvinyl)arenes can be represented by the formula

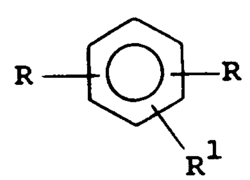

in which R is an alpha-alkylvinyl group and R' is selected from hydrogen, alkyl, alkoxy and halogen. Preferred R' are hydrogen and alkyl groups. The preferred alpha-alkylvinyl group is a $C_{3-10}$ alkenyl moiety. The preferred bis(alpha-alkylvinyl)arene is bis(alpha-alkylvinyl)benzene, with diisopropenylbenzene being most preferred.

The amount of bis(alpha-alkylvinyl)arene in the blend can vary depending on the desired properties such as water resistance, high glass transition temperature (Tg), suitable cure time and ease of processing. Generally, the relative amounts of the bisimide resin to the bis(alpha-alkylvinyl)arene will be within the mole

ratios from about 1:0.6 to about 1:1.5, preferably from about 1:0.8 to about 1:1.3.

The composition useful for the invention process may contain an inhibitor such as phenothiazine to prevent free radical polymerization of the bisimide on heating. Other suitable inhibitors include, for example, phenols such as t-butylcatechol, hydroquinone and p-methoxyphenol; quinones such as 1,4-benzoquinone and 1,4-naphthoquinone; polynitroaromatics such as picric acid and 2,4,6-trinitrotoluene; hydroxylamines such as diethylhydroxylamine; stable radicals such as di-t-butylnitroxide or diphenylpicrylhydrazyl; and certain polycyclic heterocycles such as phenothiazine. The preferred free radical inhibitor is phenothiazine. The inhibitor can be present in the composition in an amount effective to prevent free radical polymerization upon heating, generally in an amount up to 1 mole percent, based on the bisimide. If present, an amount of inhibitor within the range of 0.001 to 0.7 mole percent is preferred.

The bisimide and bis(alpha-alkylvinyl)arene can be combined in any manner desired, such as melt, solution or powder blending. The preferred technique involves melting a mixture of the solid reactants at a temperature above the respective melting points but below the polymerization temperature of any of the monomers, and stirring the melt until a homogeneous mixture is achieved. Typically, the mixture is stirred at a temperature within the range of 50 ° C to 200 ° C, preferably 100 ° C to 160 ° C.

Curing is effected by heating the mixture to a temperature effective to initiate reaction between the functional groups of the bisimide and the double bonds of the bis(alpha-alkylvinyl)arene. The temperature is generally at least 150 ° C, preferably within the range of 155 ° C to 350 ° C, held for a time of 2 hours or more, with the required reaction time dependent on the temperature-staging program used.

The cured bisimide/bis(alpha-alkylvinyl)arene compositions are useful as resin matrices for composites in aerospace and electronics applications, including large structural parts and circuit boards. Because of their low initial uncured viscosity, they are especially suitable for liquid resin processing methods such as filament winding, resin transfer molding, resin infusion molding, and pultrusion. They are also suitable for making prepregs which can be molded into composites.

For preparation of advanced composites by a liquid resin processing method, a continuous filament of a fibrous substrate is impregnated with the liquid bisimide/bis(alpha-alkylvinyl)arene mixture. The bisimide mixture should be prepared immediately before use in order to avoid increase in viscosity before impregnation. These filaments can be dimensionally stabilized by conventional liquid processing techniques such as those discussed below. The liquid resin is then cured to form a shaped article.

For preparation by filament winding, a continuous filament (yarn or roving), is passed through a bath of the molten bisimide/bis(alpha-alkylvinyl)arene composition, and then wet-wound on a mandrel or form rotated about one axis. Once the required wall thickness is reached, the bisimide/bis(alpha-alkylvinyl)arene composition is cured by heating in an autoclave or oven, or by heating the mandrel, typically at a temperature within the range of 150 ° C to 350 ° C. Once cured, the composite is removed from the mandrel. For this process, it is important that the liquid resin viscosity be in the range of 350 to 1500 mPa.s to achieve uniform filament and matrix distribution and to prevent entrapment of air or volatiles in the composite material. The reduced uncured viscosities of the invention bisimide compositions make them especially suited for such processes. Filament winding is commonly used to fabricate bodies of revolution such as rocket-motor cases, high pressure tanks, cylinders and pipe.

Pultrusion is commonly used to fabricate constant shaped cross-section components such as fence posts, channel-shaped beams and tubing. For preparation by pultrusion, bundles of filaments in various forms such as strand, roving, woven roving, cloth, and mat, and/or other forms of reinforcement are transitioned to the final cross-sectional shape in a continuous operation. Continuous filaments are drawn through a resin bath or an orifice which meters out the liquid resin. A high pressure pump may be used as necessary to impregnate the filaments with the bisimide/bis(alpha-alkylvinyl)arene matrix. An example of a pultrusion die which functions to form and cure the impregnated filaments is discussed in U.S. 3,244,784. Cure may be achieved by conventional heating typically at a temperature within the range of 150 ° C to 350 ° C and/or radio frequency heating in the final shaping die.

For preparation of reinforced laminate materials, a fibrous substrate of glass, carbon, quartz, Kevlar, polyester, poly(p-phenyleneterephthalamide), polytetrafluoroethylene, poly(p-phenylenebenzobisthiazole), boron, paper or like material, in chopped, mat or woven form is first impregnated with a bisimide/bis(alpha-alkylvinyl)arene composition in molten or solution form. A prepreg is formed by heating the impregnated substrate in a treater at a temperature sufficient to remove the solvent and to "B-stage," or partially cure the resin without gelation. In a commercial treater, the resin is preferably heated within the range of 180 ° C to 230 ° C, preferably 200 to 220 ° C, for an amount of time effective to remove the solvent and to advance the resin to the B-stage. Then, in a press, the resin is heated under temperatures effective to cure the resins and to integrate the prepregs into a laminated structure. Laminating generally involves subjecting the prepregs to a temperature above 200 ° C, preferably from 210 to 350 ° C. The laminate can optionally

include one or more layers of a conductive material such as copper. Laminating conditions generally involve heating for at least about 1 hour at a pressure within the range of 350 to 3500 kPa. The composition can optionally include constituents such as inorganic fillers and additional flame retardants, for example. The laminates optionally can be "post-cured" by heating at a temperature within the range of 200° C to 235° C for an amount of time effective to improve thermal properties, typically for 1 to 8 hours.

Example 1

This example demonstrates preparation of a bismaleimide/bis(alpha-alkylvinyl)arene liquid-processable composition.

Into a perfluoropolymer beaker were weighed 230.90 grams of bis(4-maleimidophenyl)methane, 38.90 grams of 2,4-bismaleimidotoluene, 36.90 grams of 1,3-bismaleimidobenzene, and 0.93 grams of phenothiazine added as an inhibitor to prevent radical polymerization of the bismaleimides on heating. (This mixture was used instead of a single bismaleimide resin for ease of processing, in order to hinder the bismaleimide from crystallizing from its molten mixture with the diisopropenylbenzene.) The mixture was heated in an oil bath to 205° C, stirred until homogeneous, and allowed to cool to room temperature, solidifying to an amorphous mass. The mass was then broken up into small pieces and cocured with 1,3-diisopropenylbenzene.

A number of blends of BMI's with 1,3-diisopropenylbenzene were prepared as follows. Some contained the above bismaleimide mixture (or similar mixtures prepared by the same procedure, or mixtures which were similar in composition but without phenothiazine). Others contained bis(4-maleimido-3-ethyl-5-methylphenyl)methane (MMEMI). The bismaleimide and the 1,3-diisopropenylbenzene (DIPB) were weighed into 30-mL or 50-mL glass beakers in the proportions shown in Table 1 below (mixture sizes were from 10 to 35 grams). The beakers were then heated in an oil bath at approximately 150° C, with stirring, until the contents were homogeneous.

The mixtures were then poured into molds formed from two sheets of glass separated by a 1/16" (1.6mm) or 1/8" (3.2 mm) polytetrafluoroethylene spacer and held together by clamps. The molds were then placed into an oven and cured by a number of cure cycles as shown in Table 1.

Two control castings, prepared under similar conditions but without the DIPB modifier, are also shown in Table 1. One of the two control castings contained too many voids for test samples to be cut. The other was so brittle that it cracked during attempted machining, so no physical properties could be determined.

As can be seen from Table 1, all of the cured compositions have good high glass transition temperatures above 300° C. In contrast, measurements of the cured control samples were not available because of the processing difficulties, resulting in unacceptable castings. The castings of the invention compositions also have good flexibility (without being brittle) and good fracture toughness value of approximately 0.45-0.60MPa-$m^{\frac{1}{2}}$.

TABLE 1/PROPERTIES OF CASTINGS

| Casting | BMI used[a] | DIPB/BMI molar ratio | Cure cycle[b] | Casting thickness mm | Dynamic mechanical $T_g$, °C[c] | R.T. dry (93°C wet) flexural (ASTM D-790) Strength, MPa | Modulus, GPa | Elong., % | Compact tension fracture toughness, $K_q$, MPa-m½ (ASTM E 399-83) |
|---|---|---|---|---|---|---|---|---|---|
| 1 | A | 1.07 | A | 1.59 | 337(D) | | | | |
| 2 | A | 1.07 | B | 3.18 | 317(R) | 109(94) | 3.29(2.48) | 3.9(6.3) | 0.60±0.03 |
| Control 1 | A | BMI alone | C | 3.18 | (Too many voids in casting for test samples to be cut) | | | | |
| Control 2 | B | BMI alone | C | 3.18 | (Casting was so brittle that it cracked during attempted machining) | | | | |
| 3 | MMEMI | 1.01 | D | 3.18 | e | | | | |
| 4 | MMEMI | 1.01 | E | 3.18 | 348(R) | 30[d] | 2.89 | 1.1 | 0.45±0.03 |
| 5 | MMEMI | 1.01 | D | 3.18 | 338(R) | (Voids would make flex test invalid) | | | 0.60±0.05 |
| 6 | MMEMI | 1.01 | F | 3.18 | 349(R) | (Voids would make flex test invalid) | | | 0.52±0.07 |

[a] BMI mixtures A and B contained approximately 70 mole% of bis(4-maleimidophenyl)methane, 15 mole% of 2,4-bismaleimidotoluene, and 15 mole% of 1,3-bismaleimidobenzene. BMI mixture A also contained phenothiazine at a level of 0.53 to 0.54 mole% (basis total bismaleimides) to inhibit radical polymerization. BMI mixture B contained no phenothiazine. Phenothiazine was added to the MMEMI mixtures at a level of 0.53 to 0.54 mole % (basis MMEMI). Components were mixed until homogeneous (for approximately 2 minutes in an oil bath at 155°C before mixture was poured into casting mold.

[b] Cure cycles:

A - 20 min. at 155°C, 1 hr. 25 min. at 210°C, 15 min. at 230°C, 15 min. at 250°C, 15 min. at 270°C, 15 min. at 290°C, 15 min. at 310°C, and 15 min. at 330°C.

B - 45 min. at 210°C, 15 min. at 230°C, 15 min. at 250°C, 15 min. at 270°C, and 1 hr. at 290°C.

C - 3 hr. at 210°C, 15 min. at 230°C, 15 min. at 250°C, 15 min. at 270°C, 15 min. at 290°C, 15 min. at 310°C, and 30 min. at 330°C.

D - 2 hr. at 150°C, 15 min. at 170°C, 15 min. at 190°C, 15 min. at 210°C, 15 min. at 230°C, 15 min. at 250°C, 15 min. at 270°C, and 1 hr. at 290°C.

E - 45 min. at 210°C, 15 min. at 230°C, 15 min. at 250°C, 15 min. at 270°C, and 1 hr. at 290°C.

F - 2 hr. at 180°C, 15 min. at 200°C, 15 min. at 225°C, 15 min. at 250°C, 15 min. at 270°C, and 1 hr. at 290°C.

[c] Measuring instrument: D - Du Pont Dynamic Mechanical Analyzer; R - Rheometrics Mechanical Spectrometer.

[d] R.T. flexural bar broke at surface imperfection on tensile side.

[e] Casting cracked during molding due to molding technique.

## Claims

1. A method for forming a shaped article from a bisimide resin by a liquid processing technique, which comprises:-

(a) mixing a bisimide with a bis(alpha-alkylvinyl)arene in an amount from 0.6 to 1.5 equivalents, based on the bisimide, at a temperature from 50 ° C to 200 ° C, to produce a liquid resin blend;
(b) impregnating a continuous fiber with the liquid resin blend;
(c) dimensionally stabilizing the impregnated fiber; and
(d) subjecting the dimensionally-stabilized impregnated fiber to conditions effective to cure the liquid resin blend and to form a shaped article.

**2.** The method as claimed in claim 1 in which the bis(alpha-alkylvinyl)arene is present in an amount of from 0.8 to 1.3 equivalents, based on the bisimide.

**3.** The method as claimed in claim 1 or 2 in which the bis(alpha-alkylvinyl)arene is of the formula

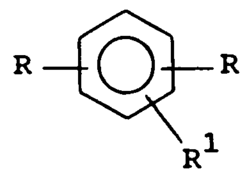

wherein R is an alpha-alkylvinyl group and R' is hydrogen, alkyl, alkoxy or halogen.

**4.** The method as claimed in claim 3 in which the bis(alpha-alkylvinyl)arene is diisopropenylbenzene.

**5.** The method as claimed in any one of claims 1 to 4 in which the bisimide is an N,N'-unsaturated bisimide of the formula

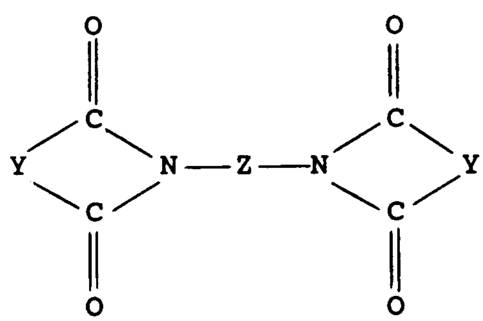

in which Y is a substituted or unsubstituted divalent radical having at least 2 carbon atoms and a carbon-carbon double bond, and Z is a divalent radical comprising from 2 to 40 carbon atoms.

**6.** The method as claimed in claim 5 in which the bismaleimide comprises bis(4-maleimidophenyl)-methane, 2,4-bismaleimidotoluene or 1,3-bismaleimidobenzene, or a mixture thereof.

**7.** The method as claimed in any one of the preceding claims in which step (a) further comprises a free radical polymerization inhibitor.

**8.** A method as claimed in any one of the preceding claims, wherein the impregnated filament is wound about a mandrel, and the mandrel is subjected to conditions effective to cure the liquid resin blend and to form a shaped article.

**9.** A method as claimed in any one of claims 1 to 7, wherein the impregnated filament is drawn through a pultrusion die under conditions effective to cure the liquid resin blend.

**10.** An article of manufacture comprising a product of the method claimed in any one of the preceding claims.

European Patent Office

# EUROPEAN SEARCH REPORT

Application Number

EP 92 20 0555

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 253 600 (AMOCO CORP.)<br>* example 1 *<br>--- | 1 | C08F222/40<br>C08G73/12<br>C08J5/24<br>B32B17/00 |
| A | EP-A-0 372 775 (MITSUI TOATSU CHEM. ,INC.)<br>----- | 1 | |
| | | | TECHNICAL FIELDS SEARCHED (Int. Cl.5) |
| | | | C08F |

The present search report has been drawn up for all claims

| Place of search | Date of completion of the search | Examiner |
|---|---|---|
| THE HAGUE | 22 APRIL 1992 | GLIKMAN J.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document